# EUROPEAN PATENT SPECIFICATION

(11) **EP 0 872 530 B1**
(45) Date of publication and mention of the grant of the patent: **09.05.2001**
(21) Application number: 96900174.2
(22) Date of filing: 04.01.1996
(51) Int. Cl.: C09J 7/02, C09J 109/06, C09J 115/00, C09J 7/04

(54) **PRESSURE-SENSITIVE ADHESIVE COMPOSITION FOR SURFACE PROTECTIVE FILM**
SELBSTKLEBENDE KLEBSTOFFZUSAMMENSETZUNG FÜR EINEN OBERFLÄCHENSCHUTZFILM
COMPOSITION ADHESIVE AUTOCOLLANTE POUR FILM PROTECTEUR DE SURFACE

(43) Date of publication of application: 21.10.1998
(73) Proprietor: Nichiban Company Limited, Bunkyo-ku, Tokyo 112-8663 (JP)
(72) Inventor: KITAZAKI, Yasuaki Nichiban Company Limited, Tokyo 112 (JP); HINO, Kinnosuke Nichiban Company Limited, Tokyo 112 (JP); ICHIMURA, Syuji Nichiban Company Limited, Tokyo 112 (JP)
(74) Representative: Betten & Resch
(86) International application number: JP9600001
(87) International publication number: WO9725388

(56) References cited:
- EP-A- 0 303 482
- EP-A- 0 440 189
- JP-A- 60 123 574
- JP-A- 62 127 376
- DATABASE WPI Section Ch, Week 9248 Derwent Publications Ltd., London, GB; Class A18, AN 92-393977 XP002099498 & JP 04 292647 A (YOKOHAMA RUBBER CO LTD) , 16 October 1992

## Description

### TECHNICAL FIELD

The present invention relates to a surface-protective film comprising a pressure-sensitive adhesive composition, more particularly to a pressure-sensitive adhesive composition a surface-protective film comprising a pressure-sensitive adhesive composition for protecting metal surfaces, glass surfaces, coating surfaces, etc.

### BACKGROUND ART

Conventional methods for protecting surfaces of top coatings formed as finish coatings on the surfaces of vehicles include coating thinly with paraffin wax. However, this method involves a problem in that the paraffin wax coating does not exhibit sufficient protecting function and that it costs much time and labor when the paraffin wax coating is to be removed.

Meanwhile, Japanese Patent Publication No. 74627/1993 discloses a method of applying a plastic film having a pressure-sensitive adhesive layer to an adherend. According to this method, the above problems can be solved. In this case, however, the pressure-sensitive adhesive layer is based on a hydrogenated block copolymer of styrene and a diene type hydrocarbon, so that the pressure-sensitive adhesive layer exhibits poor adhesion and poor removability against adherends and that the pressure-sensitive adhesive layer leaves stains of the adherends or leaves thereon traces of the films removed, disadvantageously.

EP-A-0 440 189 discloses compositions comprising a) 20-70 pts. wt. of hydrogenated styrene/butadiene or styrene/isoprene random copolymers, b) 30-80 pts. wt. tackifier and c) 0,3-20 pts. wt. cyclic olefin.

EP-A-0 303 482 discloses a composition comprises a) 20-70 wt% of a hydrogenated random copolymer of a vinyl aromatic compound and a conjugated dienic compound, b) 30-80 wt% alicyclic tackifier, c) 0,3-20 wt% 4-methylpentene and softeners.

Derwent Pub.; AN-92-393977; JP-A-04 292 647 discloses a composition comprising a) 10-70 wt% of hydrogenated styrene/butadiene copolymer, b) EVA modifier and c) 20-75 wt% tackifier.

None of the aforementioned documents is related to surface protective films.

The purpose of the present invention is to provide a surface-protective film comprising a pressure-sensitive adhesive composition which is caused to exhibit excellent adhesion to adherends, not to smear the adherends nor to leave traces thereon when the films are removed from the adherends and can also impart excellent removability to surface-protective films.

### DISCLOSURE OF THE INVENTION

The present invention is defined in independent claim 1. The dependent claims define particular embodiment of the invention.

### BEST MODE FOR CARRYING OUT THE INVENTION

The present invention will be explained below specifically.

The hydrogenated random copolymer consisting of styrene and a diene type hydrocarbon employable according to the present invention preferably has a styrene content of 1 to 50 % by weight and a melt flow rate (ASTM D1238, hereinafter abbreviated as MFR) of 2 to 10 g/10 minutes at 230°C under a load of 2.16 kg. If the styrene content is less than 1 % by weight, the resulting resin comes to have poor thermoplasticity, whereas if it is more than 50 % by weight, the resulting copolymer comes to exhibit poor adhesion to adherends and to have an increased modulus of elasticity and reduced compatibility with the tackifier resin or the softener, so that such random copolymers having styrene contents not within the specified range are not preferred as components of pressure-sensitive adhesives for surface-protective films.

The diene type hydrocarbon to be employed as a comonomer includes, for example, isoprene and butadiene, etc.

Tackifier resins employable include petroleum aliphatic resins, alicyclic resins, rosin resins, terpene resins, etc., particularly preferably hydrogenated resins thereof in view of weathering resistance.

Softening agents employable include oils, paraffin waxes, low-molecular weight polybutenes, low-molecular weight polyisoprenes, stearic acid, etc.

In the pressure-sensitive adhesive composition, if the amount of hydrogenated random copolymer consisting of styrene and a diene type hydrocarbon is less than 40 % by weight and the amount of tackifier resin or the softener is more than 60 % by weight, the resulting composition comes to exhibit poor adhesion to adherends and smears them or leave traces thereon, unpractically, when surface-protective films are removed from the adherend.

The pressure-sensitive adhesive composition for surface-protective films of the present invention may, as necessary, be incorporated with a filler or a lubricant such as talc, stearic acid amide and calcium stearate; a pigment or a dye such as titanium dioxide; a reinforcing material, for example, inorganic hollow particles such as glass balloon and silica balloon; a microspherical polymer, an antioxidant, an ultraviolet absorber, an ultraviolet stabilizer, etc., so long as the objective of the present invention is not impaired.

Base materials employable in the surface-protective films having the pressure-sensitive adhesive compositions of the present invention include known plastic films such as of a polyethylene film, a polypropylene film, a polyester film, nylon and polyvinyl chloride; or such films incorporated with a filler or a pigment such as talc, calcium carbonate and titanium dioxide by means of kneading; and paper, fabric and printed matters thereof.

### Examples

The present invention will be explained more specifically by way of Examples. It should be noted that expressions "part(s)" all mean "part(s) by weight."

### Example 1

A pressure-sensitive adhesive composition containing 100 parts of a blend of 90 % by weight of a hydrogenated random copolymer consisting of 10 % by weight of styrene and 90 % by weight of butadiene (trade name: DYNARON 1320P, available from Japan Synthetic Rubber Co., Ltd.) and 10 % by weight of a hydrogenated terpene resin (trade name: CLIALON M-105, available from Yasuhara Chemical Co., Ltd.); 0.1 part of a benzotriazole ultraviolet absorber (trade name: TINUVIN P, available from Ciba-Geigy Japan, Ltd.); and 0.1 part of a hindered phenol antioxidant (trade name: IRGANOX 565, available from Ciba-Geigy Japan, Ltd.) was melted with heating. The resulting melt was applied to a 60 µm-thick base film consisting of 100 parts of polypropylene (trade name: IDEMITSU POLYPRO F-700N, available from Idemitsu Petrochemical Co., Ltd.); 0.1 part of a benzotriazole ultraviolet absorber (trade name: TINUVIN P, available from Ciba-Geigy Japan, Ltd.); and 0.1 part of a hindered phenol antioxidant (trade name: IRGANOX 1010, available from Ciba-Geigy Japan, Ltd.) to a thickness of 20 µm by means of extrusion coating.

### Example 2

A pressure-sensitive adhesive composition containing 100 parts of a blend of 60 % by weight of a hydrogenated random copolymer consisting of 10 % by weight of styrene and 90 % by weight of butadiene (trade name: DYNARON 1320P, available from Japan Synthetic Rubber Co., Ltd.) and 40 % by weight of a hydrogenated petroleum resin (trade name: I-MARV P-100, available from Idemitsu Petrochemical Co., Ltd.); 0.05 part of a benzotriazole ultraviolet absorber (trade name: TINUVIN P, available from Ciba-Geigy Japan, Ltd.); and 0.1 part of a hindered phenol antioxidant (trade name: IRGANOX 565, available from Ciba-Geigy Japan, Ltd.) was melted with heating. The resulting melt was applied to the similar base film as used in Example 1 to a thickness of 20 µm by means of extrusion coating.

### Example 3

A pressure-sensitive adhesive composition containing 100 parts of a blend of 80 % by weight of a hydrogenated random copolymer consisting of 30 % by weight of styrene and 70 % by weight of butadiene (trade name: DYNARON 1910P, available from Japan Synthetic Rubber Co., Ltd.), 10 % by weight of a hydrogenated petroleum resin (trade name: ESCOREZ 5300, available from TONEX) and 10 % by weight of a liquid polyisoprene (trade name: LIR-30, available from Kuraray Co., Ltd.); 0.1 part of a benzotriazole ultraviolet absorber (trade name: TINUVIN P, available from Ciba-Geigy Japan, Ltd.); and 0.1 part of a hindered phenol antioxidant (trade name: IRGANOX 565, available from Ciba-Geigy Japan, Ltd.) was melted with heating. The resulting melt was applied to the same base film as used in Example 1 to a thickness of 20 µm by means of extrusion coating.

### Comparative Example 1

A pressure-sensitive adhesive composition containing 100 parts of a blend of 20 % by weight of a hydrogenated random copolymer consisting of 10 % by weight of styrene and 90 % by weight of butadiene (trade name: DYNARON 1320P, available from Japan Synthetic Rubber Co., Ltd.) and 80 % by weight of a hydrogenated terpene resin (trade name: CLIALON M-105, available from Yasuhara Chemical Co., Ltd.); 0.05 part of a benzotriazole ultraviolet absorber (trade name: TINUVIN P, available from Ciba-Geigy Japan, Ltd.); and 0.05 part of a hindered phenol antioxidant (trade name: IRGANOX 565, available from Ciba-Geigy Japan, Ltd.) was melted with heating. The resulting melt was applied to the similar base film as used in Example 1 to a thickness of 20 µm by means of extrusion coating.

### Comparative Example 2

A pressure-sensitive adhesive composition which is a blend of 90 % by weight of a hydrogenated block copolymer consisting of 13 % by weight of styrene and 87 % by weight of butadiene (trade name: KRATON G1657, available from Shell Japan) and 10 % by weight of a hydrogenated petroleum resin (trade name: I-MARV P-100, available from Idemitsu Petrochemical Co., Ltd.) was melted with heating. The resulting melt was applied to the same base film as used in Example 1 to a thickness of 20 µm by means of extrusion coating.

The surface-protective films obtained in Examples 1 to 3 and Comparative Examples 1 and 2 were applied to coated surfaces, stainless steel sheets and glass plates to test their adhesion properties to the adherends and weathering resistance. It should be noted here that weathering resistance of each film was tested after carbon arc irradiation for 60 hours in a weatherometer in terms of removability, the degree of leaving stains occurred in the adherend after removal of the film and presence or absence of trace of the films removed.

The test results are shown in Table 1.

**Table 1**

| | Adhesion to adherend surfaces | Weathering resistance | | |
|---|---|---|---|---|
| | | Removability | Stains | Trace |
| Example 1 | Good | Good | Nil | Nil |
| Example 2 | Good | Good | Nil | Nil |
| Example 3 | Good | Good | Nil | Nil |
| Comp. Example 1 | Poor | Good | Occurred | Occurred |
| Comp. Example 2 | Poor | Poor | Occurred | Occurred |

### Adhesion to adherend surfaces:

Adhesion to coating film, stainless steel sheet and glass plate surfaces

### Removability, Stains and Trace:

Evaluated after 60-hours carbon arc irradiation in a weatherometer

As is clear from the results of Examples 1 to 3 in Table 1, the surface-protective films employing the pressure-sensitive adhesive compositions of the present invention showed excellent adhesion to adherends and excellent weathering resistance, and they also showed removability from the adherends and did not leave stains the adherends nor left traces of the films removed.

Meanwhile, in the case of the pressure-sensitive adhesive composition containing less than 40 % by weight of the hydrogenated random copolymer consisting of styrene and a diene type hydrocarbon like in Comparative Example 1, it showed poor adhesion to the adherends and it also smeared the adherends and left traces of the films removed, so that such pressure-sensitive adhesive compositions are not suitable as pressure-sensitive adhesives for surface-protective films.

Further, in the case of the pressure-sensitive adhesive composition containing the hydrogenated block copolymer consisting of styrene and a diene type hydrocarbon as an elastomer component like in Comparative Example 2, it showed poor adhesion to the adherends and it also showed poor removability after the carbon arc irradiation, left stains of the adherends and left traces when the films were removed, so that such pressure-sensitive adhesive compositions are not suitable as pressure-sensitive adhesives for surface-protective films.

### INDUSTRIAL APPLICABILITY

The pressure-sensitive adhesive composition for surface-protective films according to the present invention is caused to exhibit excellent adhesion to adherends, not to leave stains of the adherends nor to leave traces thereon when the films are removed from the adherends, because of the hydrogenated random copolymer consisting of styrene and a diene type hydrocarbon incorporated as an elastomer component, and can also impart excellent removability to surface-protective films.

In other words, since surface-protective films employing the pressure-sensitive adhesive compositions of the present invention exhibit excellent adhesion to coating films, stainless steel sheets, glass plates, etc. and also show excellent removability after carbon arc irradiation, the films can be applied to and removed from adherends easily and can also be used repeatedly. In addition, these films have excellent properties as surface-protective films since they do not leave stains of adherends nor leave traces after they are removed.

Meanwhile, since the pressure-sensitive adhesive compositions of the present invention are thermoplastic, they can be applied to base materials by means of melt extrusion using a T-die or extrusion coating as well as melt spread-coating. Further, if a base material of a thermoplastic composition is selected, a surface-protective film can be formed by a single step by co-extruding hot melts of raw material resins. Accordingly, the step of forming a film on the base material and the step of applying the pressure-sensitive adhesive to the base material can be carried out simultaneously.

## Claims

1. A surface-protective film comprising a pressure-sensitive adhesive composition, the composition comprising:
40 % by weight or more of a hydrogenated random copolymer consisting of 1 to 50 % by weight of styrene and 99 to 50 % by weight of a diene type hydrocarbon, and
60 % by weight or less of a tackifier resin and/or a softener.

2. The surface-protective film according to Claim 1, wherein the hydrogenated random copolymer consisting of styrene and a diene type hydrocarbon has a melt flow rate of 2 to 10 g/10 minutes measured in accordance with ASTM D1238 at 230°C under a load of 2.16 kg.

3. The surface-protective film according to Claim 1, wherein the diene type hydrocarbon is selected from isoprene and butadiene.

4. The surface-protective film according to Claim 1, wherein the tackifier resin is selected from the group consisting of petroleum aliphatic resins, alicyclic resins, rosin resins, terpene resins and hydrogenated resins thereof.

5. The surface-protective film according to Claim 1, wherein the softener is selected from the group consisting of oils, paraffin waxes, low-molecular weight polybutenes, low-molecular weight polyisoprenes and stearic acid.

## Patentansprüche

1. Oberflächen-Schutzfilm, enthaltend eine druckempfindliche Klebstoffzusammensetzung, die umfasst
40 Gew.-% oder mehr eines hydrierten Random-Copolymers, bestehend aus 1 bis 50 Gew.-% Styrol und 99 bis 50 Gew.-% eines Kohlenwasserstoffs vom Dien-Typ, und
60 Gew.-% oder weniger eines Klebrigmacher-Harzes und/oder eines Weichmachers.

2. Oberflächen-Schutzfilm nach Anspruch 1, worin das hydrierte Random-Copolymer, das aus Styrol und einem Kohlenwasserstoff vom Dien-Typ besteht, eine Schmelzflussrate von 2 bis 10 g/10 min, bestimmt nach ASTM D1238 bei 230°C unter einer Belastung von 2,16 kg, aufweist.

3. Oberflächen-Schutzfilm nach Anspruch 1, worin der Kohlenwasserstoff vom Dien-Typ ausgewählt ist aus Isopren und Butadien.

4. Oberflächen-Schutzfilm nach Anspruch 1, worin das Klebrigmacher-Harz ausgewählt ist aus der Gruppe, die besteht aus aliphatischen Erdölharzen, alicyclischen Harzen, Rosinharzen, Terpenharzen und ihren hydrierten Harzen.

5. Oberflächen-Schutzfilm nach Anspruch 1, worin der Weichmacher ausgewählt ist aus der Gruppe, die besteht aus Ölen, Paraffinwachsen, Polybutenen mit niedrigem Molekulargewicht, Polyisoprenen mit niedrigem Molekulargewicht und Stearinsäure.

## Revendications

1. Film protecteur de surface, comprenant une composition adhésive sensible à la pression, la composition comprenant :
40 % en poids ou plus d'un copolymère statistique hydrogéné constitué de 1 % à 50 % en pois de styrène et 99 % à 50 % en poids d'un hydrocarbure de type diène, et
60 % en poids ou moins d'une résine à pouvoir d'adhésivité et/ou d'un plastifiant.

2. Film protecteur de surface selon la revendication 1, dans lequel le copolymère statistique hydrogéné constitué de styrène et d'un hydrocarbure de type diène possède un indice de viscosité de 2 à 10 g/10 minutes mesuré conformément à ASTM D1238, à 230°C sous une charge de 2,16 kg.

3. Film protecteur de surface selon la revendication 1, dans lequel on choisit l'hydrocarbure de type diène parmi l'isoprène et le butadiène.

4. Film protecteur de surface selon la revendication 1, dans lequel on choisit la résine à pouvoir d'adhésivité dans le groupe formé par les résines aliphatiques de pétrole, les résines alicycliques, les résines de colo-phane, les résines terpène et leurs résines hydrogénées.

5. Film protecteur de surface selon la revendication 1, dans lequel on choisit le plastifiant dans le groupe formé par les huiles, les cires de paraffine, les polybutènes de faible masse moléculaire, les polyisoprènes de faible masse moléculaire et l'acide stéarique.
